# DEMANDE DE BREVET EUROPEEN

(11) **EP 1 168 797 A1**
(43) Date de publication de la demande: **02.01.2002**
(21) Numéro de dépôt: 01401074.8
(22) Date de dépôt: 26.04.2001
(51) Int. Cl.: H04M 3/56, G10L 11/02, H04M 7/00

(54) **Procédé et dispositif de conférence d'ordinateur sous protocole IP**

(30) Priorité: 19.06.2000 FR 0007789
(71) Demandeur: ALCATEL, 75008 Paris (FR)
(72) Inventeur: Attimont, Luc, 78100 Saint Germain en Laye (FR); Bonnard, Pierre, 92150 Suresnes (FR)
(74) Mandataire: Sciaux, Edmond

(57) **Abrégé**

Le procédé est destiné à être mis en oeuvre à l'occasion d'une conférence réalisée, en mode vocal, entre des usagers disposant de terminaux (1) organisés pour pouvoir communiquer entre eux en mode paquet et sous protocole IP dans le cadre d'un système de communications (5)) via, en particulier, un agencement de conférence (2). L'agencement reçoit alors un signal de chacun des terminaux, il assure une diffusion d'un signal d'un terminal temporairement choisi vers les autres.

Une détection, transparente, d'activité vocale est effectuée de manière régulière sur les signaux compressés pour déterminer le signal envoyé, à diffuser, dont le niveau d'énergie est le plus élevé parmi les signaux reçus, en prenant en compte les niveaux d'énergie considérés à un instant donné, tels que définis par les paramètres de codage vocal inclus, pour chacun des signaux reçus, dans les paquets par l'intermédiaire desquels ils sont transmis.

## Description

L'invention concerne un procédé de gestion et un agencement de conférence destinés à être mis en oeuvre dans le cadre d'un système de communication qui comporte des terminaux d'usager, aptes à communiquer entre eux sous protocole IP (Internet Protocol) ou équivalent, pour leur permettre de converser à plusieurs, en conférence.

La mise en conférence d'usagers par l'intermédiaire de terminaux vocaux reliés à un réseau de communication s'effectue classiquement par l'intermédiaire d'un agencement de conférence, ou pont, qui peut éventuellement être inclus dans l'un des terminaux impliqués dans une conférence. Un tel agencement est aussi couramment inclus sous la forme d'un ou de plusieurs équipements, ou pont(s) de conférence, au niveau d'un unité constituant un noeud de réseau de communication. Ce noeud est par exemple un commutateur de type PABX.

De manière classique, un agencement de conférence reçoit les signaux de parole transmis à partir de tous les terminaux d'usager impliqués dans une conférence, avec lesquels il est en liaison, de manière à, au moins en principe, pouvoir retransmettre vers chacun de ces terminaux, soit un signal résultant d'un traitement combinatoire des signaux reçus des terminaux participants, soit un signal provenant d'un des terminaux participants qui est alors temporairement sélectionné. Un terminal participant n'a bien entendu pas besoin de recevoir le signal qu'il a envoyé lui-même. Il n'est pas toujours possible de mixer les signaux de parole provenant de tous les participants à une conférence, en particulier si le nombre ce ceux-ci est grand et il est souvent préférable que le signal transmis ne provienne que d'un seul terminal à un instant donné. Ceci peut éventuellement être obtenu par un strict respect d'une discipline de prise de parole par les participants, lorsque l'agencement de conférence combine les signaux reçus, chacun de l'un des terminaux impliqués dans une conférence, en un signal destiné à être diffusé vers les autres participants. Une autre solution couramment désignée par l'expression anglaise "push-pull", prévoit la mise en oeuvre de moyens et, en particulier, des moyens dits de détection d'activité vocale, qui permettent de sélectionner, pour retransmission, le signal reçu d'un des terminaux participants, dont l'utilisateur est alors en train de parler.

Lorsqu'un agencement de conférence est exploité pour desservir des terminaux qui sont reliés à un réseau téléphonique commuté de type GSTN (pour "general switched telephone network), il assure simultanément un grand nombre d'opérations de traitement de signal à des fins de synchronisation, de décodage, de mixage et de ré encodage des signaux qu'il reçoit des terminaux en conférence. Un tel fonctionnement implique l'usage de moyens matériels complexes et particulièrement rapides, en particulier s'il est prévu de retransmettre un signal de parole de bonne qualité, depuis l'agencement de conférence vers les terminaux participants, à partir des signaux fournis par ces terminaux, ces signaux ayant éventuellement des différences de niveau de qualité entre eux. La complexité des moyens et leur coût ont tendance à fortement augmenter lorsque les terminaux participants communiquent entre eux, en mode paquet et sous protocole IP. En effet, les signaux de parole produits par les terminaux sont alors compressés au moyen d'algorithmes de grande complexité. L'agencement de conférence décode tous les signaux qu'il reçoit simultanément des terminaux en conférence pour pouvoir les mixer et le ou les signaux résultant de ce mixage doit ou doivent être ré encodé(s) avant diffusion.

Une telle solution est prévue, en particulier, par la norme H.323 au niveau de l'agencement de conférence, appelé unité de commande multipoint MCU (multipoint control unit). Elle implique un très haut niveau de puissance de traitement de signal, supérieur à plusieurs centaines de Mip/s et en conséquence une grande dépense en matière de moyens matériels de traitement.

L'invention propose donc un procédé de gestion de conférence prévu pour être mis en oeuvre dans le cas d'une conférence réalisée, en mode vocal, entre des usagers disposant de terminaux qui sont organisés pour pouvoir communiquer entre eux en mode paquet et sous protocole IP, ou équivalent, dans le cadre d'un système de communications et, en particulier, via un agencement prévu pour permettre leur mise en conférence, ledit agencement recevant un signal en provenance de chacun des terminaux impliqués dans la conférence et assurant la diffusion du signal, qui provient de l'un de ces terminaux temporairement choisi, vers les autres.

Selon une caractéristique de l'invention, le procédé de gestion de conférence prévoit une détection, transparente d'activité vocale qui est effectuée de manière régulière sur les signaux compressés provenant des terminaux impliqués dans la conférence qui est exploitée pour déterminer le signal dont le niveau d'énergie est le plus élevé parmi les signaux reçus, en prenant en compte les niveaux d'énergie considérés à un instant donné, tels que définis par les paramètres de codage vocal inclus, pour chacun de ces signaux, dans les paquets par l'intermédiaire desquels ils sont transmis.

Selon l'invention, la détection d'activité vocale est réalisée au niveau des parties utiles RTP (Real Time Protocol) des paquets respectivement reçus des terminaux en conférence et dans lequel des horodateurs, individuellement attribués à ces paquets, permettent de déterminer ceux des paquets qui sont datés dans le temps de manière identique, ou voisine et quasi-identique à l'échelle de la fonction de détection chargée de déterminer le signal présentant le plus haut niveau d'énergie parmi ces signaux reçus considérés comme identiquement datés à un même instant donné.

Selon l'invention, il est prévu que soit mise en oeuvre une fonction de détection d'activité vocale comportant une hystérésis de seuil pour temporairement favoriser un terminal dont le signal était jusqu'alors diffusé dans la mesure où il avait le niveau en énergie le plus élevé, lorsque le signal d'un autre terminal en conférence atteint un niveau d'énergie supérieur à celui dudit signal jusqu'alors diffusé.

L'invention propose aussi un agencement de conférence qui est prévu pour permettre la mise en communication simultanée d'une pluralité de terminaux d'usager d'un système de communication, entre eux sous protocole IP ou équivalent, dans le cadre d'une conférence, de type un à la fois, où un seul des signaux respectivement envoyés, chacun sous forme de paquets par les terminaux en conférence, est sélectionné à un instant donné pour être diffusé vers les autres terminaux impliqués dans la conférence.

Selon une caractéristique de l'invention, cet agencement comporte des moyens de détection d'activité vocale pour déterminer le niveau d'énergie du signal de parole envoyé par un terminal d'usager, à partir des paramètres de codage vocal qui sont inclus dons les paquets successifs par l'intermédiaire desquels ce signal est transmis. Il comporte aussi des moyens lui permettant de déterminer le signal transmis dont le niveau d'énergie est le plus élevé, parmi les signaux envoyés qui sont considérés à un instant donné.

Selon l'invention, il est prévu des moyens permettant de fixer une hystérésis de seuil pour temporairement favoriser un terminal dont le signal était jusqu'alors diffusé dans la mesure où il avait le niveau en énergie le plus élevé, lorsque le signal d'un autre terminal en conférence atteint un niveau d'énergie supérieur à celui dudit signal jusqu'alors diffusé.

Selon l'invention, l'agencement est susceptible d'être incorporé dans un terminal de télécommunications d'usager, ou dans un équipement de noeud de réseau de télécommunications ou dans un équipement raccordé à une liaison partagée de télécommunications, par exemple une liaison formant un réseau local en boucle.

L'invention, ses caractéristiques et ses avantages sont précisés dans la description qui suit en liaison avec la figure unique évoquée ci-dessous.

La figure unique est un schéma de principe simplifié relatif à un système de communication incluant un agencement de conférence vocale entre terminaux d'usager selon l'invention.

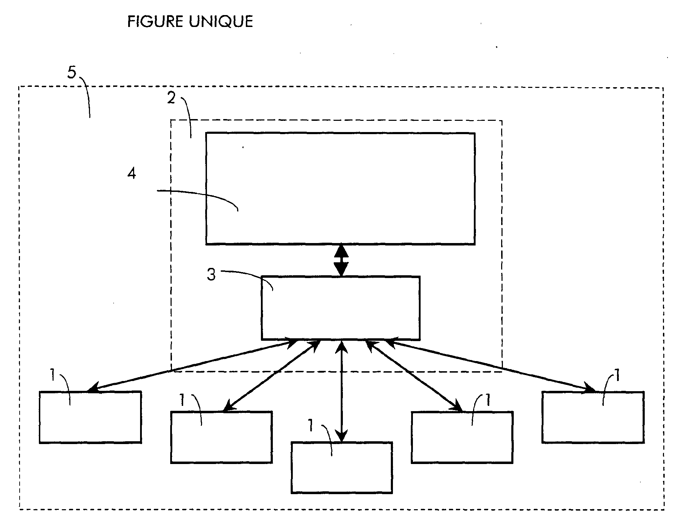

Le système de communication partiellement schématisé sur la figure 1 est supposé être un système dans lequel une pluralité de terminaux d'usager 1 sont susceptibles de communiquer entre eux par l'intermédiaire d'un réseau de mise en communication auquel les terminaux 1 sont raccordés, ce réseau comportant au moins un agencement de conférence 2 par l'intermédiaire duquel ils sont susceptibles d'être mis en conférence de manière sélective et en mode vocal. Comme il est connu, cet agencement 2 peut être inclus dans une unité de commutation et par exemple un central téléphonique à laquelle les terminaux sont reliés soient directement soit au travers d'autres unités de commutation d'un réseau de mise en communication maillé, de type téléphonique classique. Cet agencement 2 peut autrement être un équipement spécialisé d'un réseau en anneau, simple ou composé d'anneaux entrelacés, auquel les terminaux 1 sont alors reliés. Il peut aussi être incorporé dans un terminal d'usager équipé pour permettre l'établissement d'une conférence entre d'autres terminaux, via un réseau de liaisons de communications plus ou moins élaboré.

Quel que soit le cas, l'agencement 2 dispose d'un ensemble d'interconnexion 3, incorporé ou associé, dans lequel il est possible de temporairement stocker les signaux de parole émanant des terminaux participant à une conférence avant leur traitement et leur ré aiguillage vers les terminaux participants qui en sont alors destinataires. L'agencement 2 dispose de plus d'un ensemble de traitement informatique 4 qui a préférablement des fonctions de gestion et de traitement et qui est ici supposé chargé de la régie à réaliser en phase de conférence. Cet ensemble de traitement 4, constitué autour d'au moins un processeur dûment programmé. Dans l'exemple non limitatif présenté, il est supposé inclus dans l'agencement de conférence 2 de même qu'un ensemble d'interconnexion 3 permettant à un nombre maximal déterminé "n" de terminaux d'usager 1 de participer simultanément à une même conférence.

Le procédé de gestion, selon l'invention, est destiné être mis en oeuvre dans un système de communication dont les divers constituants susceptibles d'être impliqués dans une conférence, tels que les terminaux 1 et l'agencement 2, sont prévus pour permettre aux usagers d'établir des communications téléphoniques en mode VOIP (Voice Over Internet Protocole). Les communications visées sont celles qui sont établies en utilisant le protocole Internet IP ou un protocole équivalent et par l'intermédiaire d'un réseau permettant la transmission de paquets et, en particulier, du réseau Internet.

Ce procédé de gestion, selon l'invention, concerne les conférences, les plus courantes, qui sont établies entre un nombre limité de participants, par exemple de l'ordre de trois à dix. Il est ainsi possible de ne pas avoir à mixer des signaux de parole provenant simultanément de plusieurs participants en utilisant un pont de conférence mettant en oeuvre la solution "push-pull" évoquée plus haut où le signal diffusé aux terminaux des utilisateurs impliqués dans une conférence est un signal ne provenant que d'un seul terminal, à un instant donné. A cet effet, une détection d'activité vocale est réalisée de manière quasi-permanente par une fonction implantée dans l'ensemble de traitement informatique 4, lorsque des terminaux participent à une conférence pour déterminer celui dont le signal sera diffusé vers les autres.

Selon l'invention, il est prévu de réaliser les opérations de détection d'activité vocale, sur les signaux de parole compressés reçus sous forme de paquets des terminaux participants, d'une manière transparente, c'est-à-dire sans réaliser de décompression des signaux provenant chacun d'un terminal différent, dans la mesure où il n'est prévu de diffuser que le signal provenant d'un terminal à la fois et qu'il n'y a donc pas de mixage à réaliser.

Dans la forme de réalisation illustrée en figure 1, l'agencement de conférence est un équipement VOIP qui comporte un ensemble d'interconnexion 3 dont les "n" ports P₁ à Pₙ permettent à "n" terminaux 1 de se connecter, lors de l'établissement d'une conférence et pour la durée de cette conférence. Les échanges entre un terminal et le port auquel il est connecté sont par exemple réalisés sous protocole normalisé RTP (real time protocol). Les signaux de parole que produit un terminal, à partir de ce qu'il reçoit vocalement d'un usager, sont compressés et mis sous forme de paquets au niveau du terminal, par exemple en utilisant l'un ou l'autre des algorithmes normalisés de compression vocale G.723.1 ou G.729, avant d'être transmis par ce terminal au port auquel il est connecté.

La fonction de détection transparente d'activité vocale qui est assurée par l'ensemble de traitement trie les partie utiles des messages RTP que constituent les paquets de signaux qu'elle reçoit des terminaux en conférence en leur attribuant des horodateurs qui sont temporairement stockés au niveau d'une table de synchronisation. Les paquets en provenance des différents terminaux en conférence dont les horodateurs sont datés dans le temps de manière identique, ou voisine et quasi-identique à l'échelle de la fonction, sont analysés en temps réel pour déterminer leurs énergies respectives. Ceci est réalisé en exploitant les paramètres de codage de voix, tels que l'énergie d'excitation et le gain en hauteur ou "pitch" qui sont accessibles au niveau des paquets encodés, sans avoir à décoder les signaux de voix.

Les sources de signaux de parole que constituent les terminaux dont les paquets ont des horodateurs datés dans le temps de manière identique ou quasi-identique ont alors leurs énergies respectives comparées au niveau de l'ensemble de traitement pour déterminer celle dont les signaux, alors plus énergétiques, seront alors temporairement diffusés vers les autres terminaux en conférence. Comme indiqué plus haut, il n'est pas nécessaire d'effectuer une décompression au niveau des paquets émanant du terminal sélectionné pour permettre la diffusion.

La comparaison réalisée peut être fondée sur les valeurs absolues respectives des énergies des signaux à comparer. Pour tenir compte des éventuelles disparités entre sources, il peut être préféré une autre solution et, en particulier, une formulation dans laquelle la valeur absolue du signal émanant d'une source est prise en compte en association avec un facteur de correction calculé pour cette source. Ce facteur est par exemple fondé sur la différence entre la valeur courante de l'énergie à un instant donné et une valeur moyenne calculée sur un intervalle de temps déterminé précédent l'instant donné alors considéré.

Il est, bien entendu, indispensable d'éviter que les signaux de parole provenant d'un usager en train de parler, dans le cadre d'une conférence, ne soient soudainement remplacés par ceux d'un autre usager qui présentent temporairement une énergie supérieure. A cet effet, il est prévu que la fonction de détection transparente d'activité vocale dispose d'une hystérésis de seuil qui permet de continuer à transmettre les paquets relatifs à un signal parvenant d'un terminal, si un signal plus puissant en provenance d'un autre terminal apparaît de manière transitoire. L'hystérésis prévue dans le cadre de la détection de signaux de parole est aussi obtenue de manière connue de l'homme de métier pour éviter que l'apparition d'un silence au cours du discours d'un usager qui se traduit par une baisse du niveau d'énergie du signal transmis par le terminal dont se sert cet usager, n'entraîne la diffusion d'un signal en provenance d'un terminal différent qui se substituerait au signal jusqu'alors exploité à des fins de diffusion. L'effet à l'écoute qui découle de l'hystérésis prévu dans les conditions envisagées ci-dessus, peut être réduit de manière à être pratiquement imperceptible par les usagers en conférence, lors d'un changement de signal diffusé, d'un signal provenant d'un terminal à un signal provenant d'un autre terminal, en raison des possibilités de variation que permet la technique de transfert des signaux par paquets.

Le procédé de gestion de conférence, selon l'invention, évite une décompression des signaux de parole provenant des terminaux en conférence au niveau de l'agencement de conférence à partir duquel le signal émanant de l'un de ces terminaux est diffusé, ainsi que la recompression classiquement réalisée dans cet agencement pour le signal à diffuser. Le contenu des paquets parvenant du terminal dont le signal est temporairement destiné à être diffusé dans le cadre d'une conférence est simplement reproduit pour être retransmis vers les autres terminaux en conférence, sans qu'il soit nécessaire de le modifier. Ceci permet d'économiser une grande quantité de puissance de calcul au niveau du ou des processeurs de signal que comporte l'ensemble de traitement 4 de l'agencement. Ainsi, si l'on considère qu'un agencement de conférence prévu pour la mise en communication simultanée en mode VOIP de quatre terminaux nécessite le décodage des signaux transmis par trois des terminaux et le ré encodage du signal transmis par le quatrième, selon la technique antérieure, et implique une puissance de calcul de l'ordre de 20,5 Mip/s (3x3,5+10), il est pratiquement possible de réduire d'une unité le nombre de processeurs de signal d'un agencement de conférence en mettant en oeuvre le procédé de gestion selon l'invention.

De plus la fonction transparente de détection d'activité vocale est elle aussi moins coûteuse en puissance de calcul qu'une classique détection d'activité vocale réalisée au niveau des signaux provenant des terminaux, lorsque ces signaux sont décodés dans l'agencement de conférence.

En dernier lieu, le procédé de gestion de conférence, selon l'invention, permet d'éliminer la dégradation qui affecte le signal diffusé par l'agencement de conférence à partir du signal parvenant d'un des terminaux, lorsque ce signal est décodé puis ré encodé dans l'agencement. Le signal diffusé lorsque le procédé de gestion de conférence, selon l'invention, est mis en oeuvre conserve en effet la qualité qu'il a en sortie du terminal d'où il parvient. Il est ainsi possible de réaliser des agencements de conférence permettant de conserver aux signaux sonores diffusés une qualité égale à celle qu'ils ont en sortie du terminal qui les transmet initialement et ceci à un coût inférieur à celui des agencements de conférence antérieurs de même catégorie.

Comme déjà indiqué plus haut, le procédé de gestion de conférence, selon l'invention, est susceptible d'être mis en oeuvre dans des agencements de conférence fonctionnellement structurés de manière correspondant et matériellement réalisés sous des formes différentes. Un agencement de conférence permettant la mise en oeuvre du procédé de gestion, selon l'invention, peut ainsi éventuellement faire partie d'un terminal d'usager spécialisé auquel d'autres terminaux d'usager viennent temporairement s'interconnecter soit directement, soit au travers d'un réseau de communication, comme connu de l'homme de métier. Dans une autre forme de réalisation un tel agencement de conférence est susceptible de constituer un équipement spécialisé d'un réseau ou l'un des équipements d'un noeud d'un réseau de communication plus ou moins élaboré.

## Revendications

1. Procédé de gestion d'une conférence réalisée, en mode vocal, entre des usagers disposant de terminaux (1) qui sont organisés pour pouvoir communiquer entre eux en mode paquet et sous protocole IP, ou équivalent, dans le cadre d'un système de communications (5) et, en particulier, par l'intermédiaire d'un agencement (2) prévu pour permettre leur mise en conférence, ledit agencement recevant alors un signal en provenance de chacun des terminaux impliqués dans la conférence et assurant la diffusion du signal, qui provient de l'un de ces terminaux temporairement choisi, vers les autres, ledit procédé étant **caractérisé en ce qu'**il prévoit une détection, transparente, d'activité vocale qui est effectuée de manière régulière sur les signaux compressés provenant des terminaux en conférence pour déterminer le signal dont le niveau d'énergie est le plus élevé, parmi les signaux reçus, en prenant en compte les niveaux d'énergie considérés à un instant donné, tels que définis par les paramètres de codage vocal inclus, pour chacun de ces signaux, dans les paquets par l'intermédiaire desquels ils sont transmis.

2. Procédé, selon la revendication 1, dans lequel la détection d'activité vocale est réalisée au niveau des parties utiles RTP des paquets respectivement reçus des terminaux en conférence et dans lequel des horodateurs, individuellement attribués à ces paquets, permettent de déterminer ceux des paquets qui sont datés dans le temps de manière identique, ou voisine et quasi-identique à l'échelle de la fonction de détection chargée de déterminer le signal présentant le plus haut niveau d'énergie parmi ces signaux reçus considérés comme identiquement datés à un même instant donné.

3. Procédé, selon l'une des revendications 1, 2, dans lequel est mise en oeuvre une fonction de détection d'activité vocale comportant une hystérésis de seuil pour temporairement favoriser un terminal dont le signal était jusqu'alors diffusé dans la mesure où il avait le niveau en énergie le plus élevé, lorsque le signal d'un autre terminal en conférence atteint un niveau d'énergie supérieur à celui dudit signal jusqu'alors diffusé.

4. Agencement de conférence prévu pour permettre la mise en communication simultané d'une pluralité de terminaux d'usager d'un système de communication, entre eux sous protocole IP ou équivalent, dans le cadre d'une conférence, de type un à la fois, où un seul des signaux respectivement envoyés, chacun sous forme de paquets par les terminaux en conférence, est sélectionné à un instant donné pour être diffusé vers les autres terminaux impliqués dans la conférence, **caractérisé en ce qu'**il comporte :
- des moyens de détection d'activité vocale pour déterminer le niveau d'énergie du signal de parole envoyé par un terminal d'usager, à partir des paramètres de codage vocal qui sont inclus dans les paquets successifs par l'intermédiaire desquels ce signal est transmis.;
- des moyens lui permettant de déterminer le signal transmis dont le niveau d'énergie est le plus élevé, parmi les signaux envoyés qui sont considérés à un instant donné.

5. Agencement de conférence, selon la revendication 4, dans lequel il est prévu des moyens lui permettant de fixer une hystérésis de seuil pour temporairement favoriser un terminal dont le signal était jusqu'alors diffusé dans la mesure où il avait le niveau en énergie le plus élevé, lorsque le signal d'un autre terminal en conférence atteint un niveau d'énergie supérieur à celui dudit signal jusqu'alors diffusé.

6. Agencement de conférence, selon l'une des revendications 4 et 5, **caractérisé en ce qu'**il est incorporé dans un terminal de télécommunications d'usager.

7. Agencement de conférence, selon l'une des revendications 4 et 5, **caractérisé en ce qu'**il est incorporé dans un équipement d'un noeud d'un réseau de télécommunications .

8. Agencement de conférence, selon l'une des revendications 4 et 5, **caractérisé en ce qu'**il est incorporé dans un équipement raccordé à une liaison partagée de télécommunications et notamment à un équipement d'une liaison formant un réseau local en boucle.
